# FASCICULE DE BREVET EUROPEEN

(11) **EP 1 192 059 B1**
(45) Date de publication et mention de la délivrance du brevet: **04.02.2004**
(21) Numéro de dépôt: 00942136.3
(22) Date de dépôt: 06.06.2000
(51) Int. Cl.: B60K 15/035

(54) **SYSTEME A CARBURANT POUR VEHICULE**
KRAFTSTOFFSYSTEM FÜR EIN KRAFTFAHRZEUG
FUEL SYSTEM FOR A VEHICLE

(30) Priorité: 07.06.1999 BE 9900399
(43) Date de publication de la demande: 03.04.2002
(73) Titulaire: Inergy Automotive Systems Research (SA), 1120 Bruxelles (BE)
(72) Inventeur: WOUTERS, Paul, B-1800 Vilvoorde (BE); LEONARD, Stephane, B-1070 Bruxelles (BE); VAN SCHAFTINGEN, Jules-Joseph, B-1300 Wavre (BE); OP DE BEECK, Joel, B-2570 Duffel (BE)
(74) Mandataire: Decamps, Alain René François
(86) Numéro de dépôt international: PCT/EP2000/005932
(87) Numéro de publication internationale: WO 2000/074965

(56) Documents cités:
- DE-A- 4 142 016
- FR-A- 2 697 892

## Description

La présente invention concerne un système à carburant pour véhicule.

Dans les véhicules à moteur thermique, en particulier dans les véhicules automobiles, les réservoirs utilisés actuellement pour la conservation du carburant liquide ou gazeux sont souvent constitués essentiellement de matière plastique, en raison des avantages de poids, de résistance mécanique et chimique et de mise en oeuvre facilitée, en particulier lorsqu'ils présentent des formes extérieures complexes. Un grand nombre d'accessoires de ces réservoirs faisant partie, comme ces derniers, des éléments assurant la fonction carburant des véhicules sont aussi, de plus en plus souvent, réalisés en tout ou en partie en matière plastique. Parmi ces accessoires, on trouve, entre autres, les canalisations d'alimentation en carburant, les clapets de mise à l'air, les canisters à charbon actif pour l'absorption des vapeurs, les filtres et pompes à carburant et les tubulures de remplissage.

L'augmentation récente de la sévérité des normes de respect de l'environnement, en particulier celles qui concernent les émissions d'hydrocarbures par les véhicules à moteur thermique a nécessité d'améliorer encore l'imperméabilité des réservoirs embarqués, mais aussi de leurs accessoires et connexions. Il n'est pas rare, en effet, que les pertes évaporatives globalisées de l'ensemble de ces derniers soient du même ordre de grandeur que, voire dépassent dans certains cas, celles qui sont dues strictement au réservoir lui-même. La perspective du renforcement drastique, planifié à court terme, du caractère contraignant de ces normes environnementales conduit au besoin impératif de développement de solutions globales originales dont les performances d'imperméabilité et d'étanchéité dépasseraient de loin les valeurs couramment demandées aujourd'hui.

Diverses techniques sont connues pour imperméabiliser les surfaces d'objets en matière plastique. Deux approches différentes ont conduit à proposer des solutions qui ont été mises en oeuvre dans les procédés de fabrication de ces objets. La première est basée sur le traitement superficiel de l'objet au moyen d'un plasma ou d'un réactif chimique tel que l'anhydride sulfurique ou le fluor gazeux susceptibles de modifier les molécules de la matière plastique situées à la surface de l'objet. Une autre approche consiste à intercaler dans l'épaisseur de la matière plastique constituant l'objet une couche comprenant une matière particulière, souvent thermoplastique, à propriété barrière vis-à-vis d'un ou de plusieurs gaz ou liquides. Dans ce dernier cas, on a fait un large usage des techniques de mise en oeuvre par co-extrusion.

La demande de brevet JP-A- 08/118971 décrit un réservoir à carburant dont la partie inférieure présente une structure en deux couches séparées par un espace libre. Deux orifices percés dans la couche externe permettent l'entrée d'air ambiant sur la face du réservoir située du côté avant du véhicule. Lorsque le véhicule est en mouvement, l'air pénètre dans les orifices, circule entre les deux couches et sort par deux autres orifices percés dans la couche externe, dans la direction de l'arrière du véhicule. La circulation d'air entre les deux couches lorsque le véhicule est en mouvement refroidit le réservoir et son contenu et le maintient à une température modérée, ce qui a pour effet de réduire la génération de vapeurs d'hydrocarbures par le réservoir.

Toutefois, les pertes d'hydrocarbures par évaporation ne sont pas éliminées par cette configuration de réservoir à carburant. En effet, l'air rejeté à l'atmosphère qui sort de la double couche est chargé d'une quantité de vapeurs qui correspond aux pertes évaporatives du réservoir.

Par ailleurs, aucun refroidissement ne s'opère quand le véhicule est à l'arrêt et la génération de vapeurs est alors maximale.

Dans la demande de brevet français FR-2697892-A1, il est divulgué une canalisation triple à quatre parois concentriques dans laquelle le conduit intérieur et le conduit intermédiaire transportent du carburant d'un réservoir vers un moteur et retour. Dans le conduit le plus extérieur, des gaz sont prélevés dans le réservoir et sont injectés dans le conduit qui les transporte jusqu'à un dispositif de traitement.

Dans ce document, il n'est fait mention d'aucun balayage de vapeurs qui traverseraient les parois intérieures.

La demande de brevet allemand DE-4142016-A1, qui constitue l'état de la technique la plus proche selon le preambule des revendications 1 et 4, concerne un système dans lequel un réservoir à carburant est entouré d'une seconde peau, définissant de la sorte un espace qui est rempli de matière absorbant les vapeurs de carburant. Dans ce système, il n'est toutefois pas fait mention d'une enveloppe partielle autour du réservoir réalisée par une paroi du véhicule.

L'invention a pour but de remédier aux inconvénients des systèmes à carburant connus en fournissant un système à carburant moins coûteux et plus léger qui respecte l'environnement et soit conforme aux nouvelles normes évaporatives sévères qui eatreront en vigueur peu après l'an 2000.

A cet effet, l'invention concerne un système à carburant pour véhicule à moteur thermique comprenant un corps creux en métal ou en matière plastique, destiné à contenir ou à transporter du carburant, et des moyens de recouvrement de ce corps creux, selon lequel au moins une partie de la surface externe du corps creux est entourée d'une enveloppe rigide, le corps creux et l'enveloppe rigide définissant au moins en partie au moins un espace confiné autour du corps creux et selon lequel l'espace confiné est muni d'un dispositif de balayage au moyen d'un gaz destiné à être soumis ultérieurement à un traitement physique ou chimique, cet espace confiné étant défini, au moins en partie, par l'enveloppe et une paroi du véhicule.

Par carburant, on désigne toute composition chimique capable de pouvoir être brûlée en présence d'un comburant, généralement l'oxygène de l'air, qui peut être utilisée dans un moteur thermique équipant un véhicule. Les carburants peuvent se présenter à température ambiante sous un quelconque des trois états solide, liquide ou gazeux. Dans les véhicules, on préfère généralement les carburants qui sont liquides ou gazeux à température ordinaire et sous pression atmosphérique ou supérieure. Les carburants liquides tels que l'essence et le gasoil sont tout particulièrement préférés.

Le système à carburant selon l'invention est destiné à tout véhicule à moteur thermique, en particulier aux véhicules automobiles tels que les camions, voitures et motocyclettes. Par moteur thermique, on entend désigner tout moteur convertissant l'énergie chimique contenue dans un carburant en énergie mécanique. Il peut être constitué de tout type de moteur à combustion interne, à pistons ou rotatif, à carburant liquide (comme, par exemple : essence, fuel, alcool...) ou gazeux (comme, par exemple ; gaz de pétrole, gaz naturel, gaz pauvre, hydrogène, méthane...).

Par extension, on entend également désigner par moteur thermique un ou plusieurs moteurs électriques alimenté par au moins une pile à combustible dans le cas où ce combustible comprend au moins un hydrocarbure et/ou un alcool.

Le système à carburant désigne tout dispositif incorporé au véhicule dont la fonction est de stocker, de purifier, de mesurer ou de transporter un carburant destiné à l'alimentation du moteur thermique. Le système à carburant comprend au moins un réservoir et une canalisation d'alimentation du moteur en carburant. Il peut aussi comprendre, de manière non limitative, un ou plusieurs des accessoires suivants : clapet et canalisation de mise à l'air du réservoir, tubulure de remplissage, canister comprenant une matière retenant les vapeurs d'hydrocarbures, filtre à carburant, pompe à carburant, jauge de réservoir, connecteur électrique, bouchon de fermeture ainsi que tout organe, en général, par lequel transite du carburant à l'état liquide ou gazeux.

Par corps creux, on désigne tout objet dont la surface présente au moins une partie vide ou concave.

Le corps creux du système à carburant selon l'invention est en métal ou en matière plastique. Dans ce dernier cas, il comprend au moins une matière polymérique de synthèse se présentant à l'état solide dans les conditions ambiantes. Les corps creux en matière plastique sont préférés, en raison de leur meilleure élasticité et de leur aptitude supérieure à pouvoir être mis en forme complexe. Par matière plastique, on désigne aussi bien la matière, généralement homogène d'une structure monocouche que la matière hétérogène d'une structure multicouches. En particulier, le corps creux comprend avantageusement au moins un polymère thermoplastique, c'est-à-dire, un polymère qui, sous l'influence de la chaleur, fond ou se ramollit suffisamment pour permettre sa mise en forme.

Par moyens de recouvrement du corps creux, on désigne tout dispositif ou système associé au corps creux et assurant, ou tout au moins améliorant, l'isolation du corps creux de l'atmosphère externe au véhicule et/ou des sollicitations à caractère physique ou chimique qui proviennent de cette atmosphère externe. A titre d'exemple, on peut citer, entre autres, les dispositifs d'isolation thermique, d'isolation acoustique, les écrans, gaines et enveloppes de types divers, les coquilles de protection mécanique.

Selon l'invention, au moins une partie de la surface externe du corps creux est recouverte d'une enveloppe rigide. Par enveloppe rigide, on désigne tout dispositif couvrant, en métal ou en matière plastique, capable de supprimer ou de limiter fortement les déformations de l'objet qu'il recouvre ou renferme, qui seraient provoquées par une sollicitation mécanique ou thermique provenant de l'environnement extérieur. Par extension, l'enveloppe rigide désigne aussi tout dispositif couvrant dont seulement une ou plusieurs parties quelconques sont rigides et permettent de supprimer ou de limiter les déformations.

Par extension, le vocable rigide désigne aussi les dispositifs couvrants qui se laissent eux-mêmes déformer, dans la mesure où ils peuvent néanmoins supprimer ou limiter la déformation de l'objet qu'ils recouvrent.

Les enveloppes rigides en matière plastique sont préférées. Le vocable "matière plastique" a ici la même signification que celle explicitée plus haut, en particulier une structure possible en une ou plusieurs couches.

Selon l'invention, l'enveloppe rigide peut recouvrir la totalité de la surface externe du corps creux. Elle peut aussi, au contraire, ne recouvrir qu'une ou plusieurs parties, contiguës ou non, de cette surface externe.

Par surface externe du corps creux, on entend désigner la surface de ce corps creux située du côté convexe, à la frontière du corps creux avec son environnement extérieur.

Selon l'invention, le corps creux et l'enveloppe rigide définissent un espace confiné autour du corps creux, c'est-à-dire un espace, compris entre le corps creux et l'enveloppe, qui ne communique normalement pas avec l'environnement extérieur, sauf par un ou plusieurs orifices destinés à cet effet. L'espace confiné ainsi défini peut être unique ou, au contraire, se présenter sous la forme d'une multiplicité d'espaces indépendants.

Selon l'invention, le gaz de balayage est soumis à un traitement physique ou chimique ayant pour but d'éliminer les vapeurs d'hydrocarbures qui pourraient s'y trouver mélangées.

Par traitement physique ou chimique, on désigne tout traitement d'épuration du gaz de balayage ou de combustion de celui-ci qui enlève les vapeurs d'hydrocarbure. Des exemples d'un tel traitement sont, entre autres, l'absorption et/ou l'adsorption sur une matière capable de retenir sélectivement les hydrocarbures présents dans le gaz, l'élimination de ces vapeurs par condensation et séparation de la phase liquide générée ou encore la consommation des hydrocarbures par combustion chimique en présence d'oxygène dans le moteur thermique du véhicule. En variante, il est aussi possible de faire précéder le traitement physique ou chimique d'un traitement préalable, par exemple un prétraitement de conditionnement thermique. On peut combiner plusieurs traitements physiques ou chimiques différents.

L'espace confiné conforme au système à carburant selon l'invention permet le balayage par un gaz, c'est-à-dire la purge du volume gazeux qu'il contient au moyen d'une composition gazeuse introduite par un orifice percé en au moins un point déterminé de l'enveloppe, le mélange, au moins partiel, de la composition gazeuse introduite avec celle du volume de l'espace confiné et l'échappement du mélange par au moins un autre orifice percé en un endroit différent de l'enveloppe.

De préférence, le gaz de balayage est de l'air. Il est avantageux que l'air de balayage utilisé soit de l'air atmosphérique, en particulier l'air qui peut être prélevé dans l'ambiance dans laquelle se trouve le véhicule.

En variante, on peut aussi utiliser avantageusement comme gaz de balayage, le gaz ayant servi à purger un canister.

Par canister on entend désigner un réceptacle contenant une composition, généralement solide et granulée, capable de retenir les vapeurs d'hydrocarbure d'un courant gazeux. Parmi toutes les compositions possibles, le charbon actif granulé convient bien. Le canister peut être un dispositif indépendant des autres éléments du système à carburant. Il peut aussi être associé ou intégré à un autre des éléments du système, par exemple à une canalisation à carburant, ou au réservoir lui-même.

Pour réaliser la purge du volume gazeux de l'espace confiné, cet espace est associé à ou est muni d'un dispositif de balayage qui force le gaz de balayage à s'introduire dans ou à s'extraire de l'espace confiné et qui permet au mélange de ce gaz avec la composition gazeuse du volume de l'espace confiné de s'échapper de ce dernier.

Le dispositif de balayage peut fonctionner en continu ou, au contraire, fonctionner de manière intermittente. Il est intéressant, par exemple, de commander le fonctionnement intermittent du dispositif de balayage en fonction de la détection d'une concentration donnée en substance chimique ou catégorie de substances chimiques particulière dans l'espace confiné. En particulier, le fonctionnement du balayage peut être asservi à la présence d'une teneur minimum en hydrocarbures dans l'espace confiné. On peut aussi commander le fonctionnement intermittent en fonction de la détection du franchissement d'un seuil prédéterminé d'au moins une condition physique de pression ou de température au sein de l'espace confiné.

Dans le cas d'un fonctionnement intermittent, le moteur électrique est bien adapté pour l'entraînement du dispositif de balayage. Cette solution est particulièrement avantageuse lorsque le moteur fonctionne pendant que le véhicule est immobile, moteur thermique arrêté.

Tout type de dispositif adapté à la forme et au volume de l'espace confiné ainsi qu'à la nature des gaz qui le remplissent peut convenir. Il peut s'agir, par exemple d'un dispositif actif de soufflage ou d'extraction par un ventilateur actionné par un moteur ou, au contraire, d'un dispositif passif n'utilisant aucune énergie mécanique fournie par un moteur.

Dans le cas d'un dispositif de balayage passif, on peut utiliser la dépression créée dans le dispositif d'admission d'air du moteur thermique du véhicule pour aspirer le mélange du gaz de balayage avec la composition gazeuse de l'espace confiné. Pour ce faire, l'orifice d'échappement percé dans la paroi de l'enveloppe est connecté au dispositif d'admission d'air. Cette connexion peut être établie directement via une canalisation. Elle peut aussi, en variante, passer au travers d'un dispositif d'épuration du mélange avant de rejoindre le dispositif d'admission d'air.

Un autre exemple d'un dispositif de balayage passif est celui où l'on utilise l'énergie cinétique naturelle de l'air ambiant résultant du mouvement du véhicule pour forcer l'introduction de cet air dans l'espace confiné.

Dans le cas d'un dispositif de balayage actif, un cas particulier est celui du balayage au moyen d'un ventilateur actionné par un moteur électrique. Ce ventilateur peut pousser le gaz de balayage dans l'espace confiné. Il peut aussi, en variante, tirer le mélange de gaz de balayage avec la composition gazeuse présente dans l'espace confiné hors de cet espace confiné. Une autre variante est un dispositif de balayage comprenant, à la fois, un ventilateur qui pousse le gaz de balayage à l'intérieur de l'espace confiné et un autre ventilateur qui tire le mélange de ce gaz avec la composition gazeuse de l'espace confiné hors de cet espace.

Un autre cas particulier du dispositif de balayage actif est celui d'un ventilateur actionné par entraînement mécanique par le moteur thermique du véhicule. En particulier, le ventilateur peut par exemple dans ce cas, être entraîné par la courroie de distribution du moteur thermique.

Une première possibilité de traitement du gaz de balayage est réalisée par le système qui comporte un conduit relié à un canister contenant une matière retenant les vapeurs de carburant et un orifice percé dans l'enveloppe par lequel de l'air, utilisé comme gaz de balayage, peut être introduit et déboucher dans le conduit.

Le canister désigne ici un réceptacle semblable à celui décrit plus haut. Il peut s'agir du même canister que celui-là. En variante, le canister de traitement du gaz de balayage dont il est question ici peut aussi consister en un canister supplémentaire, indépendant de celui décrit plus haut en relation avec la provenance du gaz de balayage.

L'air de purge du canister doit être un air peu chargé en vapeurs de carburant. Idéalement, il est de l'air frais prélevé dans l'environnement du véhicule. On peut cependant tolérer le mélange à cet air de purge, du gaz provenant du balayage de l'espace confiné conforme au système à carburant selon l'invention.

Une autre possibilité de traitement de l'air de balayage est le système qui comporte un conduit relié à un dispositif d'admission d'air connecté au moteur du véhicule et un orifice percé dans l'enveloppe par lequel de l'air, utilisé comme gaz de balayage, peut être introduit et déboucher dans le conduit.

On peut, par exemple faire déboucher le gaz de balayage dans le filtre à air du dispositif d'admission d'air. Une autre variante est de le faire déboucher dans le répartiteur d'air du moteur.

Une vanne peut contrôler la quantité de gaz de balayage injectée dans le dispositif d'admission d'air. Cette vanne peut être une vanne électrique commandée par le calculateur qui gère la combustion du moteur.

Un système à carburant particulier conforme à l'invention est celui dans lequel l'espace confiné est défini, au moins en partie, par l'enveloppe et une paroi du véhicule.

Dans ce système particulier, une paroi du véhicule coopère avec l'enveloppe pour recouvrir au moins une partie de la surface externe du réservoir et définir l'espace confiné.

Toute paroi du véhicule, qu'elle soit extérieure ou intérieure à celui-ci, convient. Les parois extérieures du véhicule sont préférées. Parmi ces parois extérieures, sont tout particulièrement préférées les parois situées dans le soubassement du véhicule, à la limite avec l'atmosphère extérieure et, en particulier, celles qui en constituent le plancher ou le fond.

Selon ce système particulier, la paroi du véhicule est solidarisée avec l'enveloppe par toute technique généralement connue qui produit un assemblage étanche aux gaz à l'endroit de la réunion de la paroi et de l'enveloppe. Par le vocable étanche, on entend séparé de l'atmosphère ambiante et empêchant le mélange naturel et spontané des gaz contenus dans l'espace confiné avec ceux de l'atmosphère.

Dans les systèmes à carburant comprenant un réservoir qui ont été décrits supra, il est avantageux qu'au moins une partie de l'enveloppe rigide se présente sous la forme d'une coquille.

Par coquille on désigne une enveloppe partielle non fermée se présentant sous la forme d'un corps creux.

Une coquille préférée est celle qui sert de support au réservoir.

Il est aussi particulièrement intéressant que la coquille présente des chicanes qui servent de support au réservoir. La coquille se présente, par exemple, sous la forme d'une surface concave dans laquelle sont creusés des sillons en forme de chicanes.

Avantageusement, les creux des chicanes forment des chenaux qui guident l'écoulement du gaz de balayage sur la surface extérieure du réservoir. Ce type de coquille apporte aussi une rigidité supplémentaire au réservoir, particulièrement utile pour améliorer la précision de jauge ainsi que la détermination de l'étanchéité selon les tests embarqués ("On Board Diagnostics" ou "O.B.D.") .

Un cas particulièrement avantageux est celui dans lequel le réservoir repose librement sur les sommets des chicanes ou est fixé sur celles-ci par un moyen de fixation quelconque.

Il est aussi intéressant, pour diminuer le coût global d'un véhicule et en simplifier le montage, d'intégrer à la coquille d'autres fonctions indépendantes de celles propres au système à carburant lui-même. On peut, par exemple, intégrer aussi à la coquille au moins un des dispositifs suivants, de manière non limitative : réservoir pour lave-glace, système de fixation de la roue de secours, compartiment de rangement.

Tous les systèmes à carburant selon l'invention peuvent avantageusement comprendre, en variante, un isolant thermique et/ou acoustique dans au moins une partie de l'espace confiné.

Par isolant thermique et/ou acoustique, on entend un composé ou un dispositif qui atténue fortement la transmission de la chaleur ou du bruit de l'intérieur du réservoir vers l'extérieur et vice-versa.

Dans le cas de l'utilisation d'une coquille pour au moins une partie de l'enveloppe, celle-ci apporte déjà, par sa seule présence une certaine isolation thermique vis-à-vis de l'atmosphère extérieure et des radiations provenant du dispositif d'échappement du moteur thermique du véhicule. La coquille apporte en plus de manière inhérente une certaine isolation acoustique vis-à-vis de l'atmosphère extérieure.

Une première forme de réalisation du système à carburant selon l'invention consiste en un corps creux tubulaire faisant office de canalisation à carburant.

Par canalisation à carburant, on désigne tout conduit de forme tubulaire dans lequel circule du carburant. Comme exemples d'une telle canalisation, on peut citer, de manière non limitative, les lignes à carburant reliant le réservoir à la pompe à carburant, cette pompe au système de carburation ou d'injection, la tubulure de remplissage du réservoir ainsi que toute ligne de retour éventuelle de carburant dans le réservoir.

Selon cette première forme de réalisation du système à carburant conforme à l'invention, l'enveloppe est une canalisation concentrique à la canalisation à carburant et débouche dans un dispositif où s'effectue le traitement physique ou chimique du gaz de balayage.

La canalisation concentrique est un tube de plus grand diamètre que celui de la canalisation à carburant et disposée autour de cette dernière, de manière à partager son axe longitudinal. La canalisation concentrique et la canalisation à carburant définissent un espace confiné cylindrique annulaire. Le matériau de la canalisation concentrique peut être ou non identique à celui de la canalisation à carburant.

Selon une deuxième forme de réalisation du système à carburant selon l'invention, le corps creux est un réservoir à carburant.

En option, l'espace confiné entourant ce réservoir à carburant peut aussi comprendre un accessoire d'un système à carburant. Par accessoire d'un système à carburant, on désigne tout organe en général par lequel transite du carburant ou tout dispositif technique de prélèvement, de mesure ou de régulation nécessaire au bon fonctionnement du système.

Un système à carburant particulier de cette deuxième forme de réalisation est celui dans lequel l'espace confiné comprend au moins un des accessoires appartenant aux types suivants :
- canister,
- vanne de purge du canister,
- filtre à carburant,
- une partie d'une tubulure de remplissage,
- une partie d'un circuit de dégazage au remplissage,
- une partie d'un circuit de ventilation en période de service,
- une partie d'une canalisation à carburant,
- un connecteur électrique.

L'espace confiné peut éventuellement contenir plusieurs accessoires du même type.

Le canister est un réceptacle tel que défini *supra*. Le filtre à carburant est tout dispositif de filtration statique ou dynamique dont la fonction est de débarrasser le carburant d'impuretés, généralement solides qu'il pourrait contenir et qui seraient nuisibles au bon fonctionnement du moteur thermique.

La tubulure de remplissage est une tubulure en métal ou en matière plastique mono- ou multicouche qui débouche dans le réservoir à carburant et dont la fonction est de permettre le remplissage périodique du réservoir avec le carburant.

La canalisation à carburant a la même signification que celle déjà indiquée plus haut. Conformément au système à carburant selon l'invention, elle peut être réalisée en matière plastique ou en métal. Les canalisations en matière plastique sont préférées. Elles peuvent être mono- ou multicouches.

En particulier, on peut aussi trouver dans l'espace confiné, une partie de canalisation à carburant qui soit elle-même un système à carburant conforme à la première forme de réalisation du système selon l'invention.

Une variante de la deuxième forme de réalisation comprend au moins une ligne fonctionnelle du système à carburant qui aboutit dans l'espace confiné. Par ligne fonctionnelle d'un système à carburant, on désigne toute canalisation reliée au réservoir et destinée à transporter un gaz et/ou du carburant liquide. Avantageusement, plusieurs lignes fonctionnelles aboutissent dans l'espace confiné, de manière à réaliser un port multi-ligne.

Comme exemples de lignes fonctionnelles, on peut citer, non limitativement :
- Ligne de purge d'un canister ;
- Ligne de mise à l'air d'un canister ;
- Ligne de sortie de carburant d'un réservoir ;
- Ligne de retour de carburant vers un réservoir.

Dans le cas d'une ligne fonctionnelle matérialisée par une ligne de purge d'un canister, il est possible, de manière avantageuse, de balayer l'espace confiné par le gaz ayant servi à purger le canister. Cette situation est particulièrement intéressante lorsque le canister est intégré dans le réservoir.

Selon cette variante, il est particulièrement intéressant que l'enveloppe rigide soit démontable. Cette façon de faire permet en effet l'accès aux éléments compris dans l'espace confiné, en cas de nécessité de démontage ou d'entretien de tout ou partie de ces éléments, sans risque d'épanchement de carburant. Un exemple bien adapté à cette configuration de l'enveloppe rigide est celui où l'enveloppe rigide démontable comprend un espace confiné incluant une ligne de sortie du carburant et un filtre à carburant qu'il est ainsi très aisé de remplacer ou de démonter pour leur nettoyage.

D'autres exemples d'éléments pouvant être incorporés dans un espace confiné comprenant un port multi-ligne sont les suivants :
- régulateur de pression du carburant ;
- fils électriques d'alimentation d'une pompe à carburant ;
- fils électriques aboutissant à un système de jaugeage du réservoir ;
- fils électriques aboutissant à un clapet à commande électrique ;
- fils électriques aboutissant à une électrovanne d'une tubulure de purge ou de mise à l'air d'un canister ;
- fils électriques aboutissant à au moins un capteur mesurant l'état de remplissage d'un canister ;
- un canister, comme déjà mentionné plus haut pour un espace confiné qui n'était pas nécessairement un port multi-ligne ;
- un clapet de ventilation ou de mise à l'air du réservoir, en particulier un clapet traversant la paroi de ce réservoir ;
- un dispositif de détection de fuite de gaz, notamment celui requis par un dispositif de diagnostic embarqué (« OBD » : On-Board Diagnostic).

Plusieurs éléments peuvent être combinés dans un même port multi-ligne, en particulier, plusieurs éléments de même nature.

De manière préférée, l'enveloppe rigide démontable d'un port multi-ligne se raccorde de manière étanche à la paroi du réservoir. Le raccordement se fait via tout moyen de fixation connu, tel que, non limitativement, l'application et le maintien au moyen d'au moins un écrou vissé sur une embase solidaire d'une paroi du réservoir, comprenant éventuellement un joint élastique d'étanchéité, le clipsage sur une paroi du réservoir, l'introduction entre au moins deux rainures portées par le réservoir, un système d'insert métallique de type « cam-lock ».

On préfère aussi que l'enveloppe rigide d'un port multi-ligne soit séparée de l'ambiance extérieure à l'aide d'une barrière étanche aux vapeurs de carburant. Une situation idéale est celle où conjointement, l'enveloppe rigide est démontable et séparée de l'ambiance extérieure par une barrière étanche. La meilleure protection est enfin réalisée si cette enveloppe rigide démontable est fixée sur un réservoir dont la paroi est elle-même étanche aux carburants liquides et gazeux, tout au moins dans une zone de superficie incluant cette enveloppe.

Un port multi-ligne peut être monté en diverses localisations d'une paroi d'un réservoir. Parmi les positions préférées, on note, de manière non limitative, la partie supérieure du réservoir, la partie inférieure du réservoir et un des flancs du réservoir, en particulier le flanc avant par rapport au véhicule sur lequel le réservoir est monté, de manière à réduire la distance séparant le port multi-ligne au moteur.

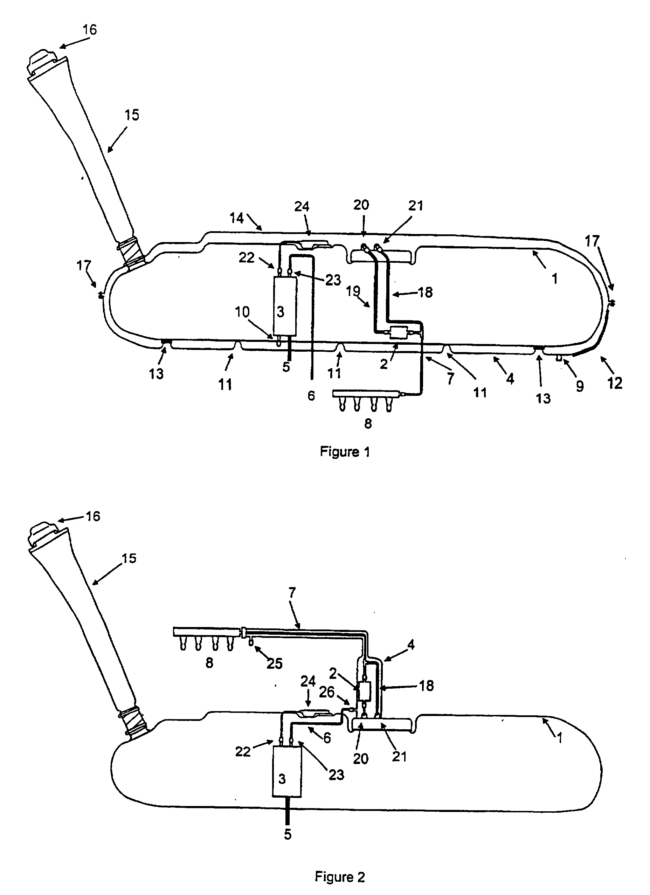

Les figures 1 à 4 qui suivent sont données pour illustrer des formes particulières de réalisation de l'invention, sans en limiter sa portée.

La figure 1 représente un réservoir (1) en polyéthylène haute densité, muni d'une tubulure de remplissage (15) et d'un bouchon de tubulure (16). Une canalisation d'alimentation en carburant (19), reliée à une pompe à carburant (non illustrée sur la figure) située à l'intérieur du réservoir (1) part du connecteur (20) fixé sur une embase en communication avec la pompe à l'intérieur du réservoir (1) et arrive à l'entrée d'un filtre à carburant (2), fixé sur une paroi externe du réservoir (1). Une canalisation de retour du carburant (18) relie la sortie du filtre (2) à un deuxième connecteur (21) fixé sur l'embase et en communication avec le volume interne du réservoir (1). Une canalisation à carburant (7) relie aussi la sortie du filtre (2) à une rampe d'injection (8) d'un moteur thermique (non représenté sur la figure).

Un clapet de mise à l'air (24) est raccordé à un canister (3) via un connecteur (22). Le canister (3) est fixé sur la paroi externe du réservoir (1) et contient du charbon actif granulé. Une ligne de purge (6) relie le canister (3) à un dispositif d'admission d'air du moteur thermique (non illustré sur la figure), via un autre connecteur (23). Un troisième connecteur (10) porté par le canister permet de relier l'atmosphère extérieure au canister (3) avec son atmosphère interne, un clapet anti-retour placé dans le connecteur (10) empêchant tout passage de l'intérieur du canister (3) vers l'extérieur. Un embout (5) porté par le canister (3) à une extrémité opposée à celle des connecteurs (10), (22) et (23) relie le canister (3) à l'air libre, à l'extérieur du réservoir. Un clapet anti-retour placé dans l'embout (5) empêche tout passage de l'extérieur du canister (3) vers l'intérieur de celui-ci.

Une double enveloppe (14), (4) entoure le réservoir (1), les canalisations (18) et (19), le filtre (2) et le canister (3) et est réalisée en 2 parties : d'une part au moyen d'un soubassement (14) d'un véhicule (non représenté sur la figure) sur lequel est monté le réservoir (1) et d'autre part, au moyen d'une coquille inférieure (4) en polyéthylène haute densité rigide. Cette coquille (4) est fixée au véhicule par des points de fixation (17) solidaires du soubassement (14).

Un orifice (9) met en communication un espace confiné (1), (4), (14) défini par la paroi du réservoir (1) et la double enveloppe (4), (14) avec l'air atmosphérique.

La coquille inférieure (4) comprend des profils (11) servant de raidisseurs et formant des chicanes pour améliorer le balayage de l'espace confiné. Des profils munis d'un isolant acoustique (13) sont également utilisés, à chaque extrémité du réservoir (1). Un écran thermique (12) est en outre fixé sur la coquille inférieure (4), du côté du voisinage d'une canalisation d'échappement (non représentée sur la figure) du moteur thermique.

Lorsque le véhicule est immobile, moteur thermique à l'arrêt, une surpression éventuelle causée par une augmentation de la température du carburant à l'intérieur du réservoir (1) est évacuée, dès qu'un seuil potentiellement dangereux est atteint, par l'ouverture du clapet (24) et entrée des gaz chargés de vapeurs de carburant dans le canister (3), via la ligne et le connecteur (22). Ils sont ensuite débarrassés des vapeurs par la matière garnissant l'intérieur du canister (3) et s'échappent purifiés à l'air libre via l'embout (5) qui traverse la double enveloppe (4), (14). Durant cette phase d'arrêt du moteur thermique, les pertes évaporatives éventuelles de la paroi du réservoir (1), ainsi que celles qui proviendraient d'un manque d'étanchéité ou de la perméabilité des raccords et des lignes aboutissant aux connecteurs (22) et (23) restent emprisonnées au sein de l'espace confiné (1), (4), (14).

Lorsque le moteur thermique est en fonctionnement, pendant certaines phases ne nécessitant pas une alimentation en carburant dans des conditions de dosage optimales, une commande automatique actionne une purge du canister (3) et met en communication la ligne (6) avec le système d'admission d'air du moteur. thermique. Ceci a pour effet de créer une dépression dans la ligne (6), ce qui provoque l'aspiration, dans le canister (3), des gaz de l'espace confiné (1), (4), (14) via le connecteur (10). L'espace confiné (1), (4), (14) se met par voie de conséquence rapidement en dépression lui aussi, ce qui a pour effet de provoquer l'entrée d'air frais par l'orifice (9) et le balayage de cet espace confiné.

Il en résulte globalement une réduction considérable des pertes évaporatives du réservoir (1) et de plusieurs de ses accessoires.

La figure 2 représente un réservoir (1), muni d'une tubulure de remplissage (15) et d'un bouchon de tubulure (16). Un filtre à carburant (2) est relié à un connecteur (20) fixé sur une embase, en communication avec une pompe à carburant située à l'intérieur du réservoir (1) (non illustrée sur la figure). Une canalisation (18) de retour du carburant relie la sortie du filtre (2) à un deuxième connecteur (21), fixé sur l'embase et en communication avec le volume interne du réservoir (1). Une canalisation d'alimentation à carburant (7) relie également la sortie du filtre (2) à une rampe d'injection (8) d'un moteur thermique (non illustré sur la figure).

Un clapet de mise à l'air (24) est raccordé à un canister (3) via une canalisation et un connecteur (22). Le canister (3) est fixé sur une paroi externe du réservoir (1).

Une double enveloppe (4) recouvre les connecteurs (20) et (21) sur l'embase, le filtre (2) ainsi que la canalisation d'alimentation (7) et définit un espace confiné (4), (7), (18), (20), (21), (2) autour de ces accessoires (7), (18), (20), (21), (2). Une ligne de purge (6) du canister (3) relie le connecteur (23) situé sur le canister (3) avec le connecteur (26) situé sur la double enveloppe (4). Un raccord (25) est disposé en bout de la double enveloppe (4), au voisinage de la rampe d'injection (8). Une connexion du raccord (25), non illustrée sur la figure, relie l'espace confiné (4), (7), (18), (20), (21), (2) avec un système d'admission d'air du moteur thermique. Un embout (5) porté par le canister (3) à une extrémité opposée à celle des connecteurs (22) et (23) relie le canister (3) à l'air libre, à l'extérieur du réservoir (1). Le canister (3) est rempli par du charbon actif granulé.

Lorsque le véhicule est immobile, moteur thermique à l'arrêt, une surpression éventuelle causée par une augmentation de la température du carburant à l'intérieur du réservoir est évacuée, dès qu'un seuil potentiellement dangereux est atteint, via l'ouverture du clapet (24) et entrée des gaz chargés de vapeurs de carburant dans le canister (3), via la ligne (22). Ils sont ensuite débarrassés des vapeurs par le charbon actif garnissant l'intérieur du canister (3) et s'échappent purifiés à l'air libre via l'embout (5). Durant cette phase d'arrêt du moteur thermique, les pertes évaporatives dues à un manque d'étanchéité ou à la perméabilité du filtre (2), des lignes (7) et (18) et des raccords avec les différents connecteurs (20), (21) et avec le filtre (2) restent emprisonnées au sein de l'espace confiné (4), (7), (18), (20), (21), (2).

Lorsque le moteur thermique est en fonctionnement, pendant certaines phases ne nécessitant pas une alimentation en carburant dans des conditions de dosage optimales, une commande automatique actionne une purge du canister (3) et met en communication le raccord (25) avec le système d'admission d'air du moteur thermique. Ceci a pour effet de créer une dépression dans l'espace confiné (4), (7), (18), (20), (21), (2), qui se communique au canister (3) via la ligne (22). Il s'ensuit une aspiration d'air frais dans le canister (3) via l'embout (5) et régénération de la matière retenant les vapeurs de carburant. L'espace confiné (4), (7), (18), (20), (21), (2) est donc purgé en même temps que le canister (3).

Le bilan global est une réduction importante des pertes évaporatives des accessoires du réservoir (1).

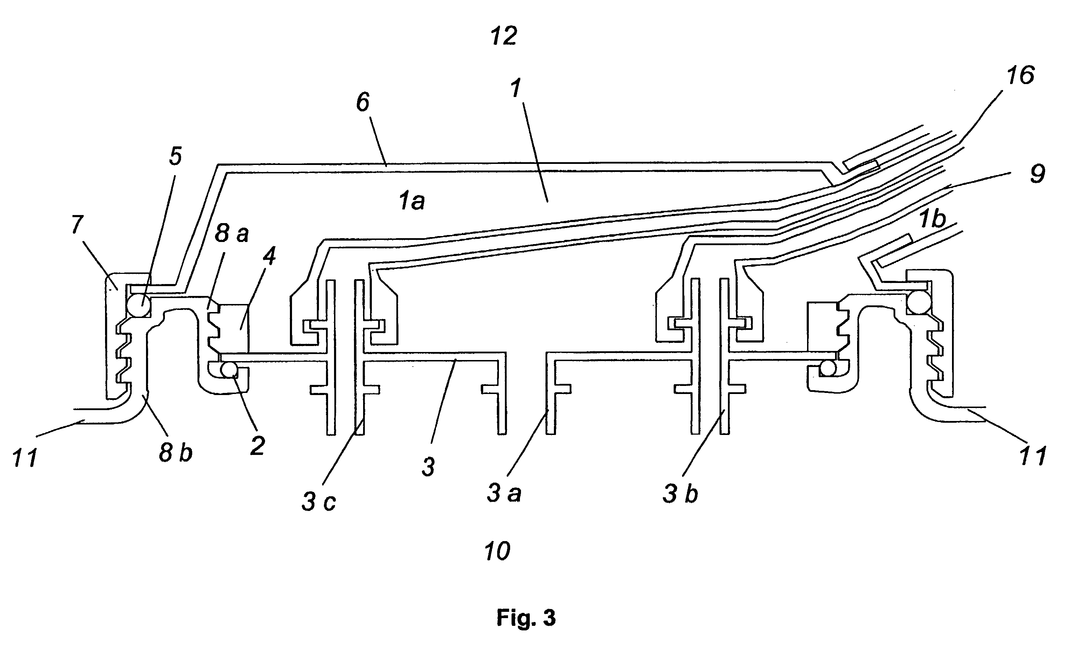

La figure 3 illustre une vue en coupe d'une partie d'une paroi (11) d'un réservoir (10), monté sur un véhicule à moteur thermique (non représenté sur la figure), en matière plastique multi-couche obtenu par extrusion-soufflage et muni d'un espace confiné (1a) réalisant un port multi-ligne (1, 3a, 3b, 3c). La paroi (11) du réservoir (10) est faite d'une structure à 6 couches comprenant, en partant de l'extérieur du réservoir et en se déplaçant vers l'intérieur de celui-ci, une première couche en polyéthylène haute densité (« PEHD »), une couche de rebroyés de fabrication, une première couche adhésive comprenant du polyéthylène greffé par de l'anhydride maléique, une couche barrière aux carburants liquides et gazeux en copolymère d'éthylène et d'alcool vinylique (« EVOH »), une deuxième couche adhésive et une deuxième couche en PEHD identiques, respectivement, aux premières. L'espace confiné (1a) est délimité vers le bas par une plaque en polyacétal (3) qui vient obturer un orifice percé dans la paroi (11) du réservoir (10) et vers le haut par une coquille rigide (6) également réalisée en polyacétal qui sépare l'espace confiné (1a) de l'ambiance extérieure (12).

La plaque (3) est assemblée sur le réservoir (10) à l'aide d'un écrou de serrage (4) vissé sur une partie filetée (8a) située en bordure de l'orifice et relevée de manière à constituer une embase. Un joint élastique (2) assure l'étanchéité entre la plaque (3) et le volume intérieur du réservoir (10). La coquille rigide (6) est également assemblée sur un autre filet (8b) de l'embase au moyen d'un écrou de serrage (7) et d'un joint élastique d'étanchéité (5). Les écrous (4) et (7) sont réalisés en polypropylène chargé de fibres de verre et les joints élastiques (2) et (5) ont une forme torique et sont en fluoroélastomère.

Une ligne de purge (3a) raccordée à un canister (non représenté) intégré à l'intérieur du volume du réservoir (10) aboutit dans l'espace confiné (1a) du port multi-ligne (1). Cette ligne de purge se prolonge, après l'espace confiné (1a) par une ligne de sortie (1b) du port multi-ligne (1) connectée à un dispositif d'admission d'air du moteur (non représenté).

Une deuxième ligne (3b) de sortie de carburant raccordée à l'intérieur du réservoir (10) à une pompe à carburant (non représentée) est connectée à un système d'alimentation en carburant du moteur (non représenté) via une ligne d'amenée de carburant (9) qui traverse le port multi-ligne (1).

Une troisième ligne (3c) de mise à l'air du canister intégré au réservoir (10) relie ce canister à un deuxième canister (non représenté) situé à l'extérieur du réservoir (10) via une ligne (16) traversant l'espace confiné (la).

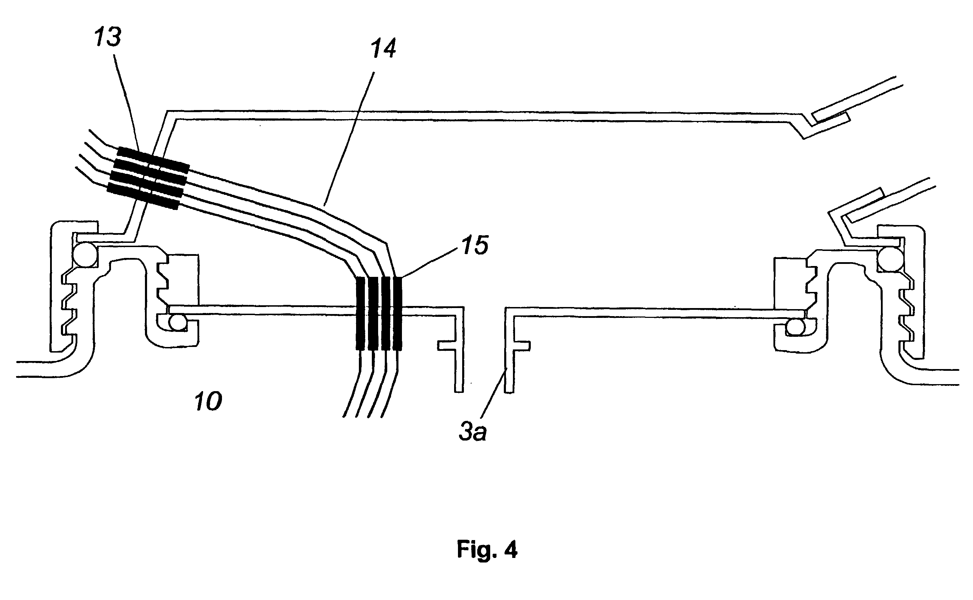

La figure 4 illustre une autre vue en coupe du port multi-ligne décrit à la figure 3, dans lequel on a montré des connecteurs électriques (13) et (15) reliés par des fils ( 14) destinés à alimenter une pompe à carburant électrique, interne au réservoir (10), et un dispositif de jaugeage (non représentés sur la figure).

## Revendications

1. Système à carburant pour véhicule à moteur thermique comprenant un corps creux (1) en métal ou en matière plastique, destiné à contenir ou à transporter du carburant, et des moyens de recouvrement (14;4) de ce corps creux (1) dans lequel au moins une partie de la surface externe du corps creux est entourée d'une enveloppe rigide (4), le corps creux (1) et l'enveloppe rigide (4) définissant au moins en partie au moins un espace confiné (1,4,14) autour du corps creux (1) et dans lequel l'espace confiné (1,4,14) est muni d'un dispositif de balayage (9,10,3) au moyen d'un gaz destiné à être soumis ultérieurement à un traitement physique ou chimique, **caractérisé en ce que** l'espace confiné (1), (4), (14) est défini, au moins en partie, par l'enveloppe rigide (4) et une paroi (14) du véhicule.

2. Système selon la revendication précédente, **caractérisé en ce qu'**il comporte un conduit (10) relié à un canister (3) contenant une matière retenant les vapeurs de carburant et un orifice (9) percé dans l'enveloppe par lequel de l'air, utilisé comme gaz de balayage, peut être introduit et déboucher dans le conduit (10).

3. Système selon la revendication 1 ou 2, **caractérisé en ce qu'**il comporte un conduit (6) relié à un dispositif d'admission d'air connecté au moteur du véhicule et un orifice (9) percé dans l'enveloppe par lequel de l'air, utilisé comme gaz de balayage, peut être introduit et déboucher dans le conduit.

4. Système à carburant pour véhicule à moteur thermique comprenant un corps creux (1) en métal ou en matière plastique, destiné à contenir ou à transporter du carburant, et des moyens de recouvrement (14;4) de ce corps creux (1) dans lequel au moins une partie de la surface externe du corps creux est entourée d'une enveloppe rigide (4), le corps creux (1) et l'enveloppe rigide (4) définissant au moins en partie au moins un espace confiné (1,4,14) autour du corps creux (1) et dans lequel l'espace confiné (1,4,14) est muni d'un dispositif de balayage (9,10,3) au moyen d'un gaz destiné à être soumis ultérieurement à un traitement physique ou chimique, **caractérisé en ce qu'**au moins une partie de l'enveloppe rigide (4) est une coquille en matière plastique ou en métal.

5. Système selon la revendication 4, **caractérisé en ce que** la coquille (4) sert de support au corps creux.

6. Système selon la revendication 5, **caractérisé en ce que** la coquille (4) présente des chicanes qui guident l'écoulement du gaz de balayage.

7. Système à carburant selon la revendication 4, **caractérisé en ce qu'**un isolant thermique et/ou acoustique (12) est incorporé à au moins une partie de l'espace confiné (1,4,14).

8. Système selon une quelconque des revendications précédentes, **caractérisé en ce que** le corps creux est une canalisation à carburant (7).

9. Système selon la revendication 8, **caractérisé en ce que** l'enveloppe (4) est une canalisation concentrique à la canalisation à carburant (7) et débouche dans un dispositif de traitement physique ou chimique (3).

10. Système selon une quelconque des revendications 1 à 7, **caractérisé en ce que** le corps creux (1) est un réservoir à carburant.

11. Système selon la revendication 10, **caractérisé en ce que** l'espace confiné (1a) comprend en outre, au moins un des accessoires appartenant aux types suivants :
• canister,
• vanne de purge du canister,
• filtre à carburant,
• une partie d'une tubulure de remplissage,
• une partie d'un circuit de dégazage au remplissage,
• une partie d'un circuit de ventilation en période de service,
• une partie d'une canalisation à carburant (3b),
• connecteur électrique (15).

12. Système selon la revendication 10 ou 11, **caractérisé en ce qu'**au moins une ligne fonctionnelle (3b) du système à carburant aboutit dans l'espace confiné.

13. Système à carburant selon la revendication 1 1,**caractérisé en ce que** l'espace confiné (1a) est balayé par un gaz ayant servi à purger un canister.

14. Système selon la revendication 12 ou 13, **caractérisé en ce que** l'enveloppe rigide (6) est démontable et se raccorde de manière étanche, via un moyen de fixation, à une paroi (11) du réservoir.

## Patentansprüche

1. Brennstoffsystem für ein Fahrzeug mit einem Verbrennungsmotor, mit einem Hohlkörper (1) aus Metall oder Kunststoff, der zur Aufnahme oder zum Transport von Kraftstoff bestimmt ist, und Abdeckmitteln (14, 4) für den Hohlkörper (1), wobei zumindest ein Teil der Außenfläche des Hohlkörpers von einer starren Hülle (4) umgeben ist, wobei der Hohlkörper (1) und die starre Hülle (4) zumindest teilweise zumindest einen umschlossenen Raum (1, 4, 14) um den Hohlkörper (1) herum definieren, und wobei der umschlossene Raum (1, 4, 14) mit einer Spülvorrichtung (9, 10, 3) ausgestattet ist, wobei die Spülung mittels eines Gases erfolgt, das später einer physikalischen oder chemischen Behandlung unterzogen wird, **dadurch gekennzeichnet, daß** der umschlossene Raum (1, 4, 14) zumindest teilweise durch die starre Hülle (4) und eine Wand (14) des Fahrzeuges gebildet ist.

2. System nach Anspruch 1, **dadurch gekennzeichnet, daß** es eine Leitung (10) aufweist, die mit einem Kanister (3) verbunden ist, der ein Material zur Aufnahme der Kraftstoffdämpfe enthält, und eine Öffnung (9), die in der Hülle ausgebildet ist, durch welche Luft, welche als Spülgas verwendet wird, eingeführt und in die Leitung (10) ausmünden kann.

3. System nach Anspruch 1 oder 2, **dadurch gekennzeichnet, daß** es eine Leitung (6) aufweist, die mit einer Lufteinlaßvorrichtung verbunden ist, die ihrerseits mit dem Motor des Fahrzeuges verbunden ist, und eine Öffnung (9), die in der Hülle ausgebildet ist, durch welche Luft, die als Spülgas verwendet wird, eingeführt und in die Leitung ausmünden kann.

4. Brennstoffsystem für ein Fahrzeug mit Verbrennungsmotor, mit einem Hohlkörper (1) aus Metall oder Kunststoff, der zur Aufnahme oder zum Transport von Kraftstoff bestimmt ist, und Abdeckmitteln (14, 4) für den Hohlkörper (1), wobei zumindest ein Teil der Außenfläche des Hohlkörpers von einer starren Hülle (4) umgeben ist, wobei der Hohlkörper (1) und die starre Hülle (4) zumindest teilweise zumindest einen umschlossenen Raum (1, 4, 14) um den Hohlkörper (1) herum definieren, und wobei der umschlossene Raum (1, 4, 14) mit einer Spülvorrichtung (9, 10, 3) ausgestattet ist, wobei die Spülung mittels eines Gases erfolgt, das später einer physikalischen oder chemischen Behandlung unterzogen wird, **dadurch gekennzeichnet, daß** zumindest ein Teil der starren Hülle (4) eine Schale aus Kunststoff oder Metall ist.

5. System nach Anspruch 4, **dadurch gekennzeichnet, daß** die Schale (4) zur Abstützung des Hohlkörpers dient.

6. System nach Anspruch 5, **dadurch gekennzeichnet, daß** die Schale (4) Schikanen aufweist, welche die Strömung des Spülgases leiten.

7. System nach Anspruch 4, **dadurch gekennzeichnet, daß** eine thermische und/oder akustische Isolierung (12) in zumindest einem Teil des umschlossenen Raumes (1, 4, 14) vorgesehen ist.

8. System nach einem der vorhergehenden Ansprüche, **dadurch gekennzeichnet, daß** der Hohlkörper eine Kraftstoffleitung (7) ist.

9. System nach Anspruch 8, **dadurch gekennzeichnet, daß** die Hülle (4) eine konzentrische Leitung zur Kraftstoffleitung (7) ist und in eine Vorrichtung zur physikalischen oder chemischen Behandlung (3) ausmündet.

10. System nach einem der Ansprüche 1 bis 7, **dadurch gekennzeichnet, daß** der Hohlkörper (1) ein Kraftstoffbehälter ist.

11. System nach Anspruch 10, **dadurch gekennzeichnet, daß** der umschlossene Raum (1a) von dem nachfolgenden Zubehör zumindest eines aufweist:
• Kanister,
• Lüftungsventil des Kanisters,
• Kraftstoffilter,
• einen Teil eines Füllröhrchens,
• einen Teil eines Entgasungskreises für das Füllen,
• einen Teil eines Lüftungskreises für das Service,
• einen Teil einer Kraftstoffleitung (3b),
• elektrische Verbinder (15).

12. System nach Anspruch 10 oder 11, **dadurch gekennzeichnet, daß** zumindest eine funktionelle Leitung (3b) des Kraftstoffsystems in den umschlossenen Raum mündet.

13. Kraftstoffsystem nach Anspruch 11, **dadurch gekennzeichnet, daß** der umschlossene Raum (1a) mit einem Gas gespült wird, das zur Reinigung eines Kanisters dient.

14. System nach Anspruch 12 oder 13, **dadurch gekennzeichnet, daß** die starre Hülle (6) abnehmbar und in abdichtender Weise über ein Befestigungsmittel an eine Wand (11) des Behälters anschließbar ist.

## Claims

1. Fuel system for a vehicle with a heat engine, comprising a hollow body (1) made of metal or of plastic, designed to contain or to transport fuel, and means (14, 4) of covering this hollow body (1), in which at least part of the outer surface of the hollow body is surrounded by a rigid jacket (4), the hollow body (1) and the rigid jacket (4) defining, at least in part, at least one confined space (1, 4, 14) around the hollow body (1), and wherein the confined space (1, 4, 14) is fitted with a device (9, 10, 3) for flushing by means of a gas intended to be subjected subsequently to a physical or chemical treatment, **characterized in that** the confined space (1, 4, 14) is defined, at least in part, by the rigid jacket (4) and by a wall (14) of the vehicle.

2. System according to the preceding claim, **characterized in that** it comprises a pipe (10) connected to a canister (3) containing a material retaining the fuel vapours and an orifice (9) drilled in the jacket by means of which air, used as a flushing gas, can be introduced and emerge into the pipe (10).

3. System according to Claim 1 or 2, **characterized in that** it comprises a pipe (6) connected to an air inlet device connected to the engine of the vehicle and an orifice (9) drilled in the jacket by means of which air, used as a flushing gas, can be introduced and emerge into the pipe.

4. Fuel system for a vehicle with a heat engine, comprising a hollow body (1) made of metal or of plastic, designed to contain or to transport fuel, and means (14, 4) of covering this hollow body (1), in which at least part of the outer surface of the hollow body is surrounded by a rigid jacket (4), the hollow body (1) and the rigid jacket (4) defining, at least in part, at least one confined space (1, 4, 14) around the hollow body (1), and wherein the confined space (1, 4, 14) is fitted with a device (9, 10, 3) for flushing by means of a gas intended to be subjected subsequently to a physical or chemical treatment, **characterized in that** at least part of the rigid jacket (4) is a shell made of plastic or of metal.

5. System according to Claim 4, **characterized in that** the shell (4) acts as a support for the hollow body.

6. System according to Claim 5, **characterized in that** the shell (4) has baffles which guide the flow of the flushing gas.

7. Fuel system according to Claim 4, **characterized in that** a thermal and/or acoustic insulator (12) is incorporated into at least part of the confined space (1, 4, 14).

8. System according to any one of the preceding claims, **characterized in that** the hollow body is a fuel pipe (7).

9. System according to Claim 8, **characterized in that** the jacket (4) is a pipe concentric with the fuel pipe (7) and emerges into a physical or chemical treatment device (3).

10. System according to any one of Claims 1 to 7, **characterized in that** the hollow body (1) is a fuel tank.

11. System according to Claim 10, **characterized in that** the confined space (1a) furthermore comprises at least one ofthe accessories belonging to the following types:
• canister,
• canister purging valve,
• fuel filter,
• part of a filler nozzle,
• part of a circuit for degassing on filling,
• part of a circuit for ventilating during operation,
• part of a fuel pipe (3b),
• electrical connector (15).

12. System according to Claim 10 or 11, **characterized in that** at least one functional line (3b) of the fuel system ends in the confined space.

13. Fuel system according to Claim 11, **characterized in that** the confined space (1a) is flushed with a gas used to purge a canister.

14. System according to Claim 12 or 13, **characterized in that** the rigid jacket (6) can be dismantled and is connected in a sealed manner, via an attachment means, to a wall (11) of the tank.
